# EUROPÄISCHE PATENTANMELDUNG

(11) **EP 4 197 945 A1**
(43) Veröffentlichungstag der Anmeldung: **21.06.2023**
(21) Anmeldenummer: 22213462.9
(22) Anmeldetag: 14.12.2022
(51) Int. Cl.: B65G 47/86

(54) **DREHRIEGELVORRICHTUNG FÜR EINEN TRANSPORTSTERN**

(30) Priorität: 16.12.2021 DE 102021133500
(71) Anmelder: KRONES AG, 93073 Neutraubling (DE)
(72) Erfinder: FISCHER, Thomas, 93073 Neutraubling (DE)
(74) Vertreter: v. Bezold & Partner Patentanwälte - PartG mbB

(57) **Zusammenfassung**

Die Erfindung betrifft u.a. eine Drehriegelvorrichtung (20) für einen Transportstern, vorzugsweise Sortierstern (10), zum Transportieren von Behältern (12). Die Drehriegelvorrichtung (20) weist einen Lagerkörper (30) und ein Drehelement (32) mit einem Betätigungsbereich (54) zum Betätigen des Drehelements (32), einem Riegelbereich (50) zum Halten eines Behälters (12) und einem Schaftbereich (52), der den Betätigungsbereich (54) und den Riegelbereich (50) integral-einstückig miteinander verbindet und drehbar in dem Lagerkörper (30) gelagert ist, auf. Der Lagerkörper (30) und das Drehelement (32) sind aus mehreren aneinander angrenzenden, vorzugsweise additiv gefertigten, Materialschichten gebildet.

## Beschreibung

### Technisches Gebiet

Die Erfindung betrifft eine Drehriegelvorrichtung, einen Transportstern, ein Verfahren zum Herstellen einer Drehriegelvorrichtung und ein Computerprogrammprodukt.

### Technischer Hintergrund

Die EP 0 534 942 B1 betrifft einen Sortierstern für Gefäßbehandlungsmaschinen mit einer drehbar antreibbaren Sternplatte und an deren äußeren Peripherie angeordneten Drehriegelvorrichtungen mit je einem an der Sternplatte befestigten Gehäuse, das mit einer zur Peripherie der Sternplatte weisenden Lagerbohrung versehen ist, einem in der Lagerbohrung zwischen zwei Endstellungen um etwa 90 Grad drehbaren Schaft, einem drehfest am äußeren, aus dem Gehäuse und der äußeren Peripherie der Sternplatte, herausragenden Schaftende befestigten Drehriegel und einer am Schaft angreifenden, mittels einer Betätigungseinrichtung zwangsbetätigbaren Schalteinrichtung zum Drehen des Schaftes zwischen beiden Endstellungen.

Die Drehriegelvorrichtung besteht herkömmlich aus einer Vielzahl von Einzelteilen, die aneinander befestigt werden müssen. Hierfür sind größere Montagearbeiten notwendig. Die Herstellung der Drehriegel kann komplizierte Fräsarbeiten erfordern, um die Drehriegel an die jeweiligen Gefäßformen anzupassen. Aufgrund der massiven Ausführung des Drehriegels kann es im Falle eines Crashs zu erheblichen Beschädigungen an der Baugruppe und an benachbarten Baugruppen kommen. Da die Drehriegelvorrichtungn zudem fest im Stern verbaut sind, ist ein Wechseln der Drehriegelvorrichtung relativ aufwendig.

Der Erfindung liegt die Aufgabe zu Grunde, eine verbesserte Drehriegelvorrichtung für einen Transportstern, vorzugsweise Sortierstern, zu schaffen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft eine Drehriegelvorrichtung für einen Transportstern, vorzugsweise Sortierstern, zum Transportieren von Behältern. Die Drehriegelvorrichtung weist einen (z. B. länglichen) Lagerkörper und ein Drehelement mit einem Betätigungsbereich zum Betätigen des Drehelements, einem (z. B. krallen-, klauen- oder klammerförmigen) Riegelbereich zum Halten (z. B. Sichern) eines Behälters und einem Schaftbereich, der den Betätigungsbereich und den Riegelbereich integral-einstückig miteinander verbindet und drehbar in dem Lagerkörper gelagert ist, auf. Besonders bevorzugt sind der Lagerkörper und das Drehelement (z. B. jeweils) aus mehreren aneinander angrenzenden (z. B. übereinanderliegenden), vorzugsweise additiv gefertigten, (z. B. zumindest abschnittsweise gleichen) Materialschichten (z. B. aus Kunststoff, vorzugsweise PA - Polyamid, wie PA12) gebildet.

Vorteilhaft ermöglicht die Drehriegelvorrichtung, dass die gesamte Baugruppe vereint als ein Bauteil additiv bzw. generativ gefertigt werden kann, z. B. im Pulverbettverfahren. Dadurch kann eine aufwendige Montage von Einzelteilen der Drehriegelvorrichtung entfallen, wodurch sich Kostenvorteile bei der Montage erzielen lassen. Durch die additive Fertigung kann auf ein aufwendiges Fräsen verzichtet werden, wodurch sich weitere Kostenvorteile bei der Einzelteilfertigung ergeben können. Die additive Fertigung ermöglicht zudem eine vollkommen freie Gestaltung des Riegelbereichs, sodass dieser an unterschiedlichste Behälterformen und Behältergrößen anpassbar ist. Bei der additiven Fertigung kann insbesondere ein Material gewählt werden, das im Falle einer Fehlfunktion (z. B. Verklemmen) größere Beschädigung der Baugruppe und der umliegenden Baugruppen verhindert, da der Riegelbereich bei einem Crash einfach abbrechen würde (Sollbruchstelle).

In einem Ausführungsbeispiel weist der Lagerkörper und/oder das Drehelement mehrere, vorzugsweise kugelförmige, Verstärkungsteile, vorzugsweise aus einem Glaswerkstoff, auf, die in den Materialschichten eingebettet sind. Vorteilhaft kann damit die Drehriegelvorrichtung wesentlich verstärkt und weniger verschleißanfällig sein.

In einem weiteren Ausführungsbeispiel ist das Drehelement zwischen einer Verriegelungsstellung (zum Beispiel mit horizontal ausgerichtetem Riegelbereich) zum Halten eines Behälters mittels des Riegelbereichs und einer Freigabestellung (zum Beispiel mit senkrecht ausgerichtetem Riegelbereich) zum Freigeben des Behälters drehbar, vorzugsweise um rund 90°. Vorzugsweise kann das Drehelement in der Verriegelungsstellung und/oder in der Freigabestellung, vorzugsweise magnetisch, arretierbar sein (z. B. mittelbar oder unmittelbar). Vorteilhaft kann damit erreicht werden, dass der Riegelbereich in der Verriegelungsstellung und/oder Freigabestellung gehalten werden kann, ohne dass hierfür bspw. eine dauerhafte Betätigung erforderlich ist.

In einem weiteren Ausführungsbeispiel weist der Lagerkörper eine Aufnahme auf, in der ein Magnet, der das Drehelement in einem von der Verriegelungsstellung und der Freigabestellung (z. B. mittelbar oder unmittelbar) arretiert, angeordnet, vorzugsweise eingeklebt, ist. Optional kann der Lagerkörper eine weitere Aufnahme aufweisen, in der ein weiterer Magnet, der das Drehelement in dem anderen von der Verriegelungsstellung und der Freigabestellung (z. B. mittelbar oder unmittelbar) arretiert, angeordnet, vorzugsweise eingeklebt, ist. Vorteilhaft kann damit auf einfache Weise eine magnetische Arretierung bei der additiv gefertigten Drehriegelvorrichtung ermöglicht werden.

In einer Ausführungsform weist die Drehriegelvorrichtung ferner ein zusätzliches Drehelement auf, das drehbar in dem Lagerkörper gelagert und zum Drehen mit dem Drehelement verbunden ist, vorzugsweise miteinander kämmend. Vorzugsweise kann das zusätzliche Drehelement aus mehreren aneinander angrenzenden (z. B. übereinanderliegenden), vorzugsweise additiv gefertigten, Materialschichten gebildet sein (z. B. mit Einbettung von bspw. kugelförmigen Verstärkungsteilen aus vorzugsweise einem Glaswerkstoff). Alternativ oder zusätzlich kann das zusätzliche Drehelement eine (z. B. zusätzliche) Aufnahme aufweisen, in der ein (z. B. zusätzlicher) Magnet zum Arretieren des Drehelements angeordnet ist (z. B. mittelbar über ein Arretieren des zusätzliche Drehelements). Vorteilhaft kann damit das Drehelement mittelbar über das zusätzliche Drehelement magnetisch arretiert werden, z. B. in der Verriegelungsstellung und/oder in der Freigabestellung.

Beispielsweise kann der Magnet in der Aufnahme des zusätzlichen Drehelements in einem von der Verriegelungsstellung und der Freigabestellung dem Magneten in der Aufnahme des Lagerkörpers gegenüberliegen. Alternativ oder zusätzlich kann der Magnet in der Aufnahme des zusätzlichen Drehelements im anderen von der Verriegelungsstellung und der Freigabestellung dem Magneten in der weiteren Aufnahme des Lagerkörpers gegenüberliegen.

In einem weiteren Ausführungsbeispiel weist das zusätzliche Drehelement einen (z. B. zusätzlichen) Zahnradabschnitt auf, der mit einem Zahnradabschnitt des Betätigungsbereichs kämmt. Vorteilhaft kann damit eine Wirkverbindung zwischen dem Drehelement und dem zusätzlichen Drehelement ermöglicht werden.

In einem weiteren Ausführungsbeispiel weist das zusätzliche Drehelement einen (z. B. zusätzlichen) Hebelarmabschnitt zum Betätigen durch eine Nocke oder eine Steuerkurve auf. Vorteilhaft kann damit das Drehelement zum Drehen betätigt werden, sodass wiederum das Drehelement gedreht werden kann, z. B. von der Verriegelungsstellung zu der Freigabestellung oder umgekehrt.

In einer Ausführungsform weist der Lagerkörper einen, vorzugsweise ringsegmentförmigen, Rampenbereich auf, an dem das Drehelement, vorzugsweise der Betätigungsbereich des Drehelements, zum Verringern eines Längsspiels des Drehelements beim Drehen des Drehelements geführt ist. Vorteilhaft kann ein fertigungsbedingt vorhandenes Längsspiel des Drehelements so zumindest verkleinert werden. Damit kann der Behälter in der Verriegelungsstellung des Drehelements besonders sicher gehalten sein.

Beispielsweise kann der Rampenbereich an einer dem Drehriegel abgewandten und/oder einem Hebelarmabschnitt des Betätigungsbereichs zugewandten Rückseitenfläche des Lagerkörpers angeordnet sein. Alternativ oder zusätzlich kann der Rampenbereich koaxial zu einer Längsachse des Schaftbereichs angeordnet sein bzw. sich koaxial zu der Längsachse erstrecken. Alternativ oder zusätzlich kann der Rampenbereich einer dem Lagerkörper zugewandten Stirnfläche des Betätigungsbereichs gegenüberliegen.

In einer weiteren Ausführungsform weist der Lagerkörper ein (z. B. Längs-) Loch, vorzugsweise Durchgangsloch, auf, in dem der Schaftbereich, vorzugsweise gleitend, drehbar gelagert ist. Besonders vorteilhaft weist der Lagerkörper entlang des Schaftbereichs mindestens einen Durchlass auf, der einen Außenumfang des Lagerkörpers und das Loch miteinander verbindet. Vorteilhaft kann durch den mindestens einen Durchlass nach der additiven Fertigung loses Materialpulver aus dem Inneren des Lagerkörpers entlang des Schaftbereichs nach außen entleert werden, sodass eine besonders reibungsarme, gleitende Drehlagerung des Schaftbereichs in dem Lagerkörper ermöglicht wird.

In einer Ausführungsvariante ist der mindestens eine Durchlass als ein Langloch, das parallel zu dem Schaftbereich ausgerichtet ist, ausgebildet. Alternativ oder zusätzlich weist der mindestens eine Durchlass mehrere Durchlässe auf, die bezüglich einer Längsachse des Schaftbereichs voneinander beabstandet und/oder an derselben Seite des Lagerkörpers angeordnet sind.

Beispielsweise sind mehrere der Durchlässe an einer Oberseite des Lagerkörpers angeordnet und/oder mehrere der Durchlässe sind an einer Unterseite des Lagerkörpers angeordnet.

In einer weiteren Ausführungsvariante weist der Betätigungsbereich einen Hebelarmabschnitt zum Betätigen durch eine Nocke oder eine Steuerkurve auf, wobei der Hebelarmabschnitt vorzugsweise außerhalb des Lagerkörpers angeordnet ist. Vorteilhaft kann das Drehelement an dem Hebelarmabschnitt zum Drehen zu der Verriegelungsstellung betätigt werden.

In einer weiteren Ausführungsvariante weist der Betätigungsbereich einen Zahnradabschnitt zum Betätigen durch einen (z. B. zusätzlichen) Zahnradabschnitt eines zusätzlichen Drehelements der Drehriegelvorrichtung auf, wobei der Zahnradabschnitt des Betätigungsbereichs vorzugsweise innerhalb des Lagerkörpers angeordnet ist. Vorteilhaft kann das Drehelement an dem Zahnradabschnitt von dem zusätzlichen Drehelement zum Drehen zu der Freigabestellung betätigt werden. Andererseits kann über den Zahnradabschnitt bspw. auch eine Drehung des Drehelements an das zusätzliche Drehelement übertragen werden, z. B. zum Ausschwenken eines Hebelarmabschnitts des zusätzlichen Drehelements.

Ein weiterer Aspekt der vorliegenden Offenbarung betrifft einen Transportstern, vorzugsweise Sortierstern, zum Transportieren von Behältern. Der Transportstern weist mehrere Drehriegelvorrichtungen wie hierin offenbart auf, wobei die mehreren Drehriegelvorrichtungen, vorzugsweise gleichmäßig, um einen Umfang des Transportsterns angeordnet sind. Optional kann der Transportstern ferner bspw. mindestens eine Sternplatte aufweisen, die an ihrem Umfang mehrere, vorzugsweise bogenförmige, Taschen zum Aufnehmen der Behälter aufweist, wobei die mehrere Drehriegelvorrichtungen zum Halten der Behälter in den mehreren Taschen angeordnet sind.

Vorzugsweise kann der Transportstern einen (z. B. ersten) Nocken oder eine (z. B. erste) Steuerkurve zum Betätigen des Hebelarmabschnitts des Betätigungsbereichs des Drehelements zum Bewegen des Drehelements, z. B. zu der Verriegelungsstellung, aufweisen. Bevorzugt kann der Nocken von einer Steuereinheit verstellbar bzw. steuerbar sein.

Vorzugsweise kann sich der Begriff "Steuereinheit" auf eine Elektronik (z. B. ausgeführt als eine Treiberschaltung oder mit Mikroprozessor(en) und Datenspeicher) und/oder eine mechanische, pneumatische und/oder hydraulische Steuerung beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Bevorzugt kann der Transportstern einen (z. B. zweiten) Nocken oder eine (z. B. zweite) Steuerkurve zum Betätigen des Hebelarmabschnitts des zusätzlichen Drehelements zum Bewegen des zusätzlichen Drehelements und des Drehelements, z. B. in die Freigabestellung, aufweisen. Bevorzugt kann der Nocken starr sein.

Bevorzugt kann der Transportstern in einer Behälterbehandlungsanlage (z. B. zum Herstellen, Reinigen, Beschichten, Prüfen, Abfüllen, Verschließen, Etikettieren, Bedrucken und/oder Verpacken von Behältern für flüssige Medien, vorzugsweise Getränke oder flüssige Nahrungsmittel) umfasst sein.

Beispielsweise können die Behälter als Flaschen, Dosen, Kanister, Kartons, Flakons usw. ausgeführt sein.

Ein weiterer Aspekt der vorliegenden Offenbarung betrifft ein Verfahren zum Herstellen einer Drehriegelvorrichtung, vorzugsweise wie hierin offenbart, für einen Transportstern, vorzugsweise Sortierstern, zum Transportieren von Behältern. Das Verfahren weist ein additives Fertigen (z. B. 3D-Drucken) der Drehriegelvorrichtung mit einem (z. B. länglichen) Lagerkörper und einem Drehelement aufweisend einen Betätigungsbereich zum Betätigen des Drehelements, einen (z. B. krallen-, klauen- oder klammerförmigen) Riegelbereich zum Halten (z. B. Sichern) eines Behälters und einen Schaftbereich, der den Betätigungsbereich und den Riegelbereich integral-einstückig miteinander verbindet und drehbar in dem Lagerkörper gelagert ist, auf, wobei der Lagerkörper und das Drehelement gemeinsam (z. B. vollständig) additiv gefertigt werden, vorzugsweise in einem Pulverbettverfahren und/oder mit Einbettung von (z. B. kugelförmigen) Verstärkungsteilen (z. B. aus Glaswerkstoff) (z. B. in dem Lagerkörper und/oder dem Drehelement). Vorteilhaft können mit dem Verfahren die gleichen Vorteile erzielt werden, die bereits unter Bezugnahme auf die Drehriegelvorrichtung erläutert wurden.

In einem weiteren Ausführungsbeispiel wird das Drehelement teilweise innerhalb und teilweise außerhalb des Lagerkörpers gemeinsam mit dem Lagerkörper additiv gefertigt. Alternativ oder zusätzlich werden der Lagerkörper und das Drehelement mit einem dazwischen angeordneten Spalt, vorzugsweise im Zehntelmillimeterbereich oder Hundertstelmillimeterbereich, gemeinsam additiv gefertigt. Alternativ oder zusätzlich werden der Lagerkörper und das Drehelement derart gemeinsam additiv gefertigt, dass das Drehelement durch den Riegelbereich und den Betätigungsbereich axial in dem Lagerkörper gesichert ist. Alternativ oder zusätzlich wird beim additiven Fertigen ein zusätzliches Drehelement, das zum Drehen mit dem Drehelement (z. B. direkt) verbunden ist (z. B. miteinander kämmend), gemeinsam mit dem Lagerkörper und dem Drehelement additiv gefertigt.

Beispielsweise kann der Schaftbereich und/oder ein Zahnradabschnitt des Betätigungsbereichs innerhalb des Lagerkörpers gemeinsam mit dem Lagerkörper additiv gefertigt werden. Alternativ oder zusätzlich kann der Riegelbereich und/oder ein Hebelarmabschnitt des Betätigungsbereichs außerhalb des Lagerkörpers gemeinsam mit dem Lagerkörper additiv gefertigt werden.

In einer Ausführungsform weist das Verfahren ferner ein Entfernen von losem Materialpulver, das zwischen dem Lagerkörper und dem Drehelement angeordnet ist, durch mindestens einen Durchlass im Lagerkörper hindurch nach dem additiven Fertigen auf.

In einer weiteren Ausführungsform weist das Verfahren ein Positionieren, vorzugsweise Einkleben, mindestens eines Magneten in dem Lagerkörper und/oder in einem zusätzlichen Drehelement der Drehriegelvorrichtung auf, vorzugsweise zum (z. B. mittelbaren) magnetischen Arretieren des Drehelements.

Ein weiterer Aspekt der vorliegenden Offenbarung betrifft ein Computerprogrammprodukt aufweisend (z. B. mindestens ein computerlesbares Speichermedium mit darauf gespeicherten) Anweisungen, die eine additive Fertigungsvorrichtung (z. B. 3D-Drucker) veranlassen, eine Drehriegelvorrichtung wie hierin offenbart in einer Vielzahl von Materialschichten in einem additiven Fertigungsverfahren herzustellen oder ein Verfahren wie hierin offenbart durchzuführen.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Draufsicht auf einen Transferstern gemäß einem Ausführungsbeispiel der vorliegenden Offenbarung;
- Figur 2: eine perspektivische Ansicht einer Drehriegelvorrichtung gemäß einem Ausführungsbeispiel der vorliegenden Offenbarung
- Figur 3: eine Seitenansicht der beispielhaften Drehriegelvorrichtung
- Figur 4: eine Draufsicht auf die beispielhaften Drehriegelvorrichtung;
- Figur 5: eine Vorderansicht der beispielhaften Drehriegelvorrichtung;
- Figur 6: eine Rückansicht der beispielhaften Drehriegelvorrichtung;
- Figur 7: eine perspektivische Querschnittansicht durch die beispielhafte Drehriegelvorrichtung;
- Figur 8: eine perspektivische Längsschnittansicht durch die beispielhafte Drehriegelvorrichtung;
- Figur 9: eine Querschnittansicht durch die beispielhafte Drehriegelvorrichtung; und
- Figur 10: eine perspektivische Längsschnittansicht durch die beispielhafte Drehriegelvorrichtung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

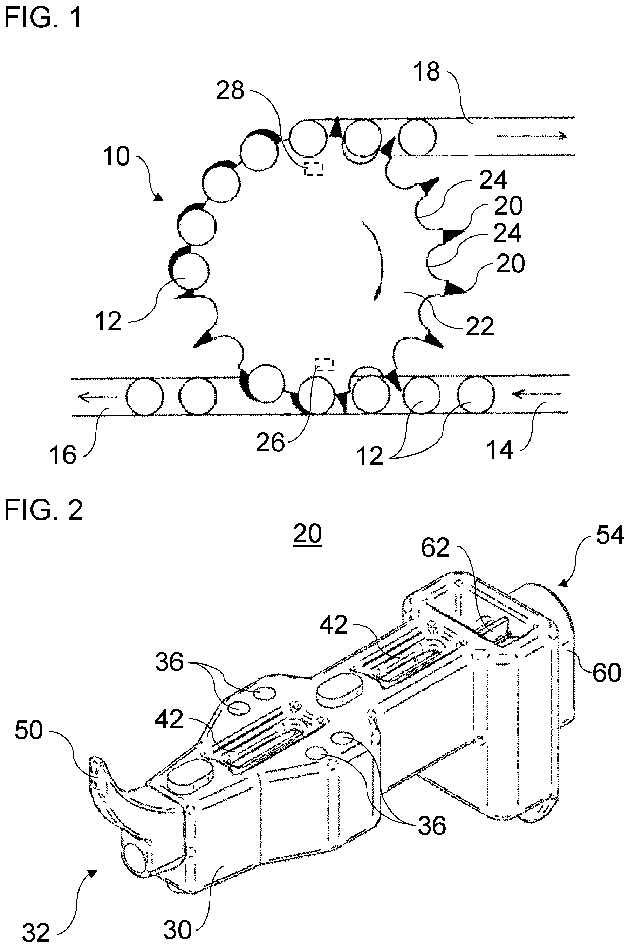

Die Figur 1 zeigt einen Sortierstern 10. Bevorzugt kann der Sortierstern 10 in jeglichem Abschnitt einer Behälterbehandlungsanlage zum Aussortieren oder Verteilen von Behältern 12 umfasst sein. Beispielsweise können mittels des Sortiersterns 10 verschmutzte oder beschädigte Behälter 12 nach einer Inspektionsmaschine aussortiert werden. Alternativ können mittels des Sortiersterns 10 beispielsweise nicht korrekt gefüllte bzw. unverschlossene Behälter 12 nach einer Füllmaschine oder nicht ordnungsgemäß etikettierte Behälter 12 nach einer Etikettiermaschine aussortiert werden. Der Sortierstern 10 kann bei den genannten Behälterbehandlungsmaschinen als Auslaufstern oder als Einlaufstern zum Aussortieren von Fremdbehältern verwendet werden. Ferner kann der Sortierstern 10 im Bereich zwischen einer Etikettiermaschine und einer Packmaschine eingesetzt werden, um bspw. den einspurig aus der Etikettiermaschine auslaufenden Behälterstrom mehrbahnig aufzuteilen. In diesem Fall können bspw. mehrere Sortiersterne 10 hintereinander bzw. nebeneinander angeordnet sein.

Der Sortierstern 10 kann einen Zulaufförderer 14 mit einem ersten Auslaufförderer 16 und einem zweiten Auslaufförderer 18 verbinden. Der Sortierstern 10 kann die Behälter 12 von dem Zulaufförderer 14 wie gewünscht auf den ersten Auslauförderer 16 und den zweiten Auslaufförderer 18 aufteilen. Die Förderer 14, 16, 18 können beispielsweise als Bandförderer oder Mattenförderer, vorzugsweis Mattenkettenförderer, ausgeführt sein. Der Zulaufförderer 14 kann tangential bezüglich eines Teilkreises des Sortiersterns 10 an dem Sortierteren 10 einlaufen. Die Auslaufförderer 16, 18 können an unterschiedlichen Umfangspositionen tangential bezüglich eines Teilkreises des Sortiersterns 10 von dem Sortierstern 10 auslaufen. Bevorzugt kann der erste Auslaufförderer 16 kollinear mit dem Zulaufförderer 14 angeordnet sein. Alternativ sind jedoch auch andere Ausrichtungen zwischen dem ersten Auslaufförderer 16 und dem Zulaufförderer 14 denkbar.

Der Sortierstern 10 weist mehrere Drehriegelvorrichtungen 20 zum Halten bzw. Sichern der Behälter 12 auf. Der Sortierstern 10 kann ferner mindestens eine drehbare Sternplatte 22 mit mehreren Aufnahmen bzw. Taschen 24 aufweisen.

Die Drehriegelvorrichtungen 20 können gleichmäßig um einen Außenumfang des Sortiersterns 10 herum angeordnet sein. Beispielsweise können die Drehriegelvorrichtungen 20 an der mindestens einen Sternplatte 22 gehalten bzw. befestigt sein. Bevorzugt sind die Drehriegelvorrichtungen 20 zwischen einer oberen Sternplatte 22 und einer unteren Sternplatte 22 gehalten bzw. befestigt.

Die mindestens eine Sternplatte 22 kann mehrere Aufnahmen bzw. Taschen 24 aufweisen. Die Taschen 24 können um einen Außenumfang der mindestens einen Sternplatte 22 herum angeordnet sein. In jeder Tasche 24 kann je ein Behälter 12 aufgenommen werden. Bevorzugt sind die Taschen 24 und die Drehriegelvorrichtungen 20 abwechselnd um den Außenumfang des Sortiersterns 10 angeordnet. Eine Form der Taschen 24 kann an eine Form der Behälter 12 angepasst sein. Beispielsweise können die Taschen 24 zylindermantelsegmentförmig ausgeführt sein.

Jeder Drehriegelvorrichtung 20 kann eine der Taschen 24 zugeordnet sein. Die Drehriegelvorrichtungen 20 können zwischen einer Verriegelungsstellung und einer Freigabestellung bewegt werden. In der Verriegelungsstellung kann die jeweilige Drehriegelvorrichtung 20 die zugeordnete Tasche 24 zumindest teilweise schließen bzw. abdecken, um einen Behälter 12 in der Tasche 24 zu befördern. In der Freigabestellung können die Drehriegelvorrichtungen 20 die jeweils zugeordnete Tasche 24 freigegeben, sodass kein Behälter 12 in der Tasche 24 gefördert wird.

Der aufgenommene Behälter 12 kann in der jeweilige Tasche 24 befördert werden, wenn die zugeordnete Drehriegelvorrichtung 20 in der Verriegelungsstellung ist. Damit können bspw. in den Taschen 24 aufgenommene Behälter 12 von dem Zulaufförderer 14 zu dem zweiten Auslauförderer 18 gefördert werden. Andernfalls, wenn die zugeordnete Drehriegelvorrichtung 20 in der Freigabestellung ist, kann der Behälter 12 die jeweilige Tasche 24 wieder verlassen. Damit können bspw. in den Taschen 24 aufgenommene Behälter 12 zum Abfördern auf dem ersten Auslaufförderer 16 oder dem zweiten Auslaufförderer 18 freigegeben werden.

Die Drehriegelvorrichtungen 20 können zum Einnehmen der Verriegelungsstellung und/oder der Freigabestellung betätigt werden. Die Betätigung kann beispielsweise mechanisch, elektrisch, elektromagnetisch, pneumatisch und/oder hydraulisch erfolgen.

Bevorzugt kann eine Betätigungseinrichtung des Sortiersterns 10 zwei Nocken 26, 28 aufweisen. Die Nocken 26, 28 können unterhalb der mindestens einen Sternplatte 22 angeordnet sein. Der erste Nocken 26 kann im Übergabebereich zwischen dem Zulaufförderer 14, dem Sortierstern 10 und dem ersten Auslaufförderer 16 angeordnet sein. Der zweite Nocken 28 kann im Übergabebereich zwischen dem Sortierstern 10 und dem zweiten Auslaufförderer 18 angeordnet sein. Der erste Nocken 26 kann die den ersten Nocken 26 passierenden Drehriegelvorrichtungen 20 zum Einnehmen der Verriegelungsstellung betätigen. Der zweite Nocken 28 kann die den zweiten Nocken 28 passierenden Drehriegelvorrichtungen 20 zum Einnehmen der Freigabestellung betätigen.

Der erste Nocken 26 kann steuerbar bzw. verstellbar sein, sodass er steuerbar ist, ob dieser die ihn passierenden Drehriegelvorrichtungen 20 betätigt oder nicht. Die Verstellung des ersten Nockens 26 kann beispielsweise mechanisch, elektrisch, elektromagnetisch, pneumatisch und/oder hydraulisch erfolgen, vorzugsweise gesteuert von einer Steuereinheit des Sortiersterns 10.

Ist der erste Nocken 26 in der Betätigungsstellung, betätigt er die passierenden Drehriegelvorrichtungen 20 zum Einnehmen der Verriegelungsstellung. Die Behälter 12 von dem Zulaufförderer 14 gelangen in die Taschen 24 und werden in diesen durch die zugeordneten Drehriegelvorrichtungen 20 in der Verriegelungsstellung gehalten. Die Behälter 12 können entsprechend mittels des Sortiersterns 10 von dem Zulaufförderer 14 zu dem zweiten Auslaufförderer 18 transportiert werden. Ist der erste Nocken 26 außerhalb von der Betätigungsstellung, betätigt er die passierenden Drehriegelvorrichtungen 20 nicht. Die Behälter 12 gelangen zwar von dem Zulaufförderer 14 in die Taschen 24, werden darin aber nicht gehalten, da die zugeordneten Drehriegelvorrichtungen 20 nicht in die Verriegelungsstellung bewegt werden. Die Behälter 12 können die Taschen 24 demnach direkt wieder verlassen. Die Behälter 12 können entsprechend von dem Zulaufförderer 14 zu dem ersten Auslaufförderer 16 transportiert werden.

Der zweite Nocken 28 kann starr bzw. unbewegbar sein, sodass er alle passierenden Drehriegelvorrichtungen 20 zum Einnehmen der Freigabestellung betätigt. Die in den Taschen 24 transportierten Behälter 12 können demnach im Übergabebereich mit dem zweiten Auslaufförderer 18 von den Drehriegelvorrichtungen 20 freigegeben und von dem zweiten Auslaufförderer 18 abtransportiert werden.

Alternativ zu den Nocken 26, 28 kann eine Betätigung der Drehriegelvorrichtungen 20 beispielsweise auch über eine mechanische Steuerkurve oder anders ermöglicht werden.

Auch wenn im bevorzugten Ausführungsbeispiel die Drehriegelvorrichtung 20 im Sortierstern 10 umfasst ist, ist die Anwendung der Drehriegelvorrichtung 20 nicht darauf beschränkt. Beispielsweise könnte die Drehriegelvorrichtung 20 auch in einem Transportstern umfasst sein, der Behälter 12 beispielsweise nur von einem Zulaufförderer zu einem Auslaufförderer transportiert.

Die Figuren 2 bis 10 zeigen unterschiedliche Ansichten einer beispielhaften Drehriegelvorrichtung 20 in der Freigabestellung.

Die Drehriegelvorrichtung 20 weist einen Lagerkörper 30 und ein Drehelement 32 mit einem Riegelbereich 50, einem Schaftbereich 52 und einem Betätigungsbereich 54 auf. Optional kann die Drehriegelvorrichtung 20 ein zusätzliches Drehelement 34 aufweisen.

Der Lagerkörper 30 ist aus mehreren aneinander angrenzenden Materialschichten gebildet. Ebenso ist das Drehelement 32 ist aus mehreren aneinander angrenzenden Materialschichten gebildet. Optional kann auch das zusätzliche Drehelement 34 aus mehreren aneinander angrenzenden Materialschichten gebildet sein. Die Materialschichten sind bevorzugt additiv gefertigt. Der Lagerkörper 30, das Drehelement 32 und/oder das zusätzliche Drehelement 34 kann beispielsweise aus einem Kunststoffmaterial additiv gefertigt sein. Besonders bevorzugt weist der Lagerkörper 30, das Drehelement 32 und/oder das zusätzliche Drehelement 34 mehrere Verstärkungsteile auf, die in den Materialschichten eingebettet sind. Die Verstärkungsteile können beispielsweise kugelförmig sein und/oder einen Glaswerkstoff aufweisen.

Besonders bevorzugt sind der Lagerkörper 30 und das Drehelement 32 und optional das zusätzliche Drehelement 34 gemeinsam additiv gefertigt, vorzugsweise in einem Pulverbettverfahren. Das Drehelement 32 kann teilweise innerhalb und teilweise außerhalb des Lagerkörpers 30 additiv gefertigt sein. Beispielsweise können der Schaftbereich 52 und ein Abschnitt des Betätigungsbereichs 54 des Drehelements 32 innerhalb des Lagerkörpers 30 additiv gefertigt sein. Der Riegelbereich 50 und ein anderer Abschnitt des Betätigungsbereichs 54 des Drehelements 32 können außerhalb des Lagerkörpers 30 additiv gefertigt sein. Der Riegelbereich 50 und der Betätigungsbereich 54 des Drehelements 32 können das Drehelement 32 axial in dem Lagerkörper 30 sichern. Das zusätzliche Drehelement 34 kann ebenfalls innerhalb des Lagerkörpers 30 additiv gefertigt sein. Bei der gemeinsamen additiven Fertigung können der Lagerkörper 30, das Drehelement 32 und optional das zusätzliche Drehelement 34 mit einem dazwischen angeordneten Spalt, der vorzugsweise im Zehntelmillimeterbereich oder im Hundertstelmillimeterbereich liegt, additiv gefertigt werden.

Der Lagerkörper 30 kann beispielsweise mehrere Befestigungslöcher 36, ein Loch 38, eine Aussparung 40, mindestens einen Durchlass 42, mindestens eine Aufnahme 44, 46 und/oder mindestens einen Rampenbereich 48 aufweisen.

Der Lagerkörper 30 kann zum Montieren der Drehriegelvorrichtung 20 an dem Sortierstern 10 (siehe Figur 1) ausgebildet sein. Die Drehriegelvorrichtung 20 kann mittels des Lagerkörpers 30 derart an dem Sortierstern 10 angebracht werden, dass eine Längsachse der Drehriegelvorrichtung 20 radial zu einer Drehachse bzw. Mittelachse des Sortiersterns 10 verlaufen kann. Beispielsweise kann der Lagerkörper 30 die mehreren Befestigungslöcher 36 aufweisen, mit denen der Lagerkörper 30 an dem Sortierstern 10, z. B. an dessen mindestens einer Sternplatte 22, befestigt, vorzugsweise verschraubt, werden kann.

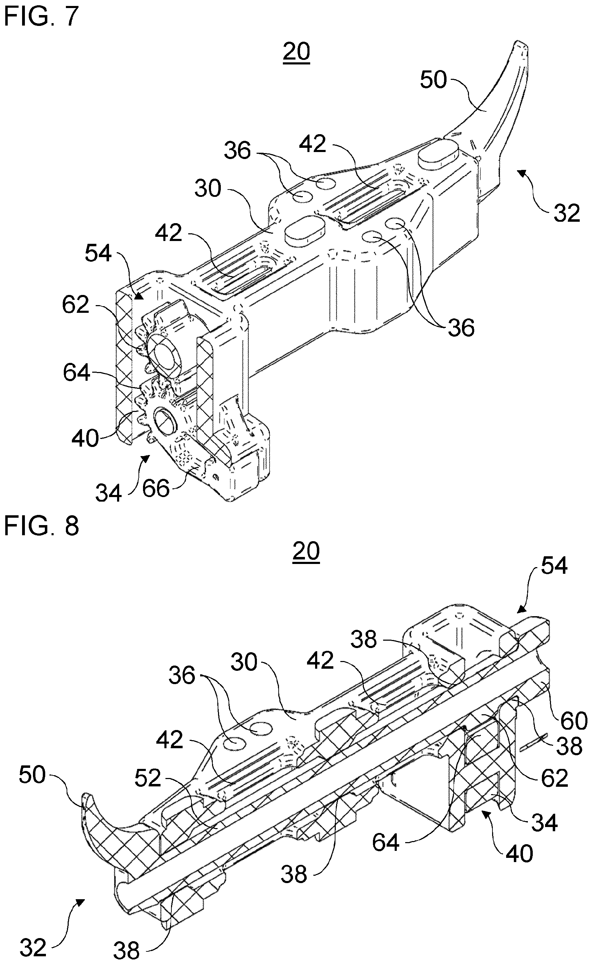

Der Lagerkörper 30 kann das Drehelement 32 drehbar lagern. Beispielsweise kann der Lagerkörper 30 das Loch 38 zum drehbaren Lagern des Drehelements 32 aufweisen (siehe Figur 8). Das Loch 38 ist bevorzugt als ein Durchgangsloch ausgeführt. Das Loch 38 kann sich von einer Vorderseite bzw. vorderen Stirnseite des Lagerkörpers 30 durch den Lagerkörper 30 hindurch bis zu einer Rückseite bzw. hinteren Stirnseite des Lagerkörpers 30 erstrecken. Das Loch 38 kann parallel zu einer Längsachse der Drehriegelvorrichtung 20 bzw. des Lagerkörpers 30 sein. Das Drehelement 32 kann drehbar in dem Loch 38 angeordnet sein. Im Einzelnen kann der Schaftbereich 52 des Drehelements 32 drehbar in dem Loch 38 angeordnet sein. Die drehbare Lagerung des Drehelements 32 in dem Loch 38 ist bevorzugt eine Gleitlagerung. Der Lagerkörper 30 kann ein Gehäuse für den Schaftbereich 52 bilden.

Der Lagerkörper 30 kann das zusätzliche Drehelement 34 drehbar lagern, vorzugsweise auf einer Drehachse parallel zu einer Drehachse des Drehelements 32. Im Einzelnen kann der Lagerkörper 30 eine Achse bzw. einen stabförmigen oder zapfenförmigen Abschnitt aufweisen, auf dem das zusätzliche Drehelement 34 drehbar gelagert ist. Der Lagerkörper 30 kann die Aussparung 40 aufweisen, in der das zusätzliche Drehelement 34 positioniert ist. Die Aussparung 40 kann sich senkrecht zum Loch 38 bzw. zur Längsachse des Lagerkörpers 30 durch den Lagerkörper 30 erstrecken und in das Loch 38 münden.

Der mindestens eine Durchlass 42 des Lagerkörpers 30 kann einen Außenumfang des Lagerkörpers 30 und das Loch 38 miteinander verbinden. Der mindestens eine Durchlass 42 kann in einem Abschnitt entlang des Schaftbereichs 52 angeordnet sein. Bevorzugt ist der mindestens eine Durchlass 42 als ein Langloch, das parallel zu dem Schaftbereich 52 ausgerichtet ist, ausgebildet. Bevorzugt sind mehrere Durchlässe 42 umfasst, die bezüglich einer Längsachse des Schaftbereichs 52 voneinander beabstandet sind. Bevorzugt sind jeweils mehrere Durchlässe 42 an derselben Seite des Lagerkörpers 30 angeordnet. Beispielsweise sind mehrere Durchlässe 42 an einer Oberseite des Lagerkörpers 30 angeordnet und mehrere der Durchlässe 42 sind an einer Unterseite des Lagerkörpers 30 angeordnet. Durch den mindestens einen Durchlass 42 hindurch kann nach der additiven Fertigung loses Materialpulver aus dem Inneren des Lagerkörpers 30, bevorzugt aus einem Spalt zwischen dem Loch 38 und dem Schaftbereich 52 entfernt werden.

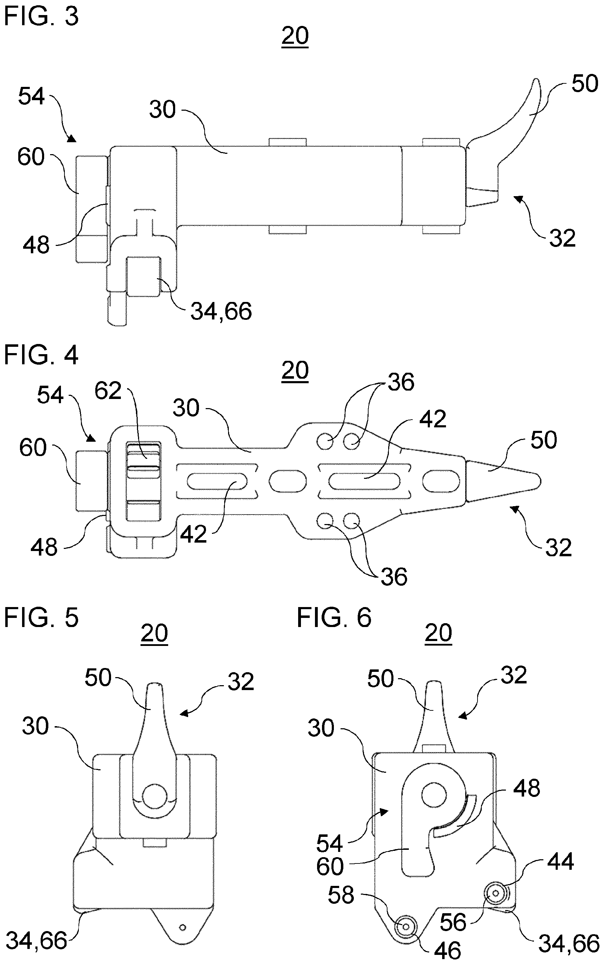

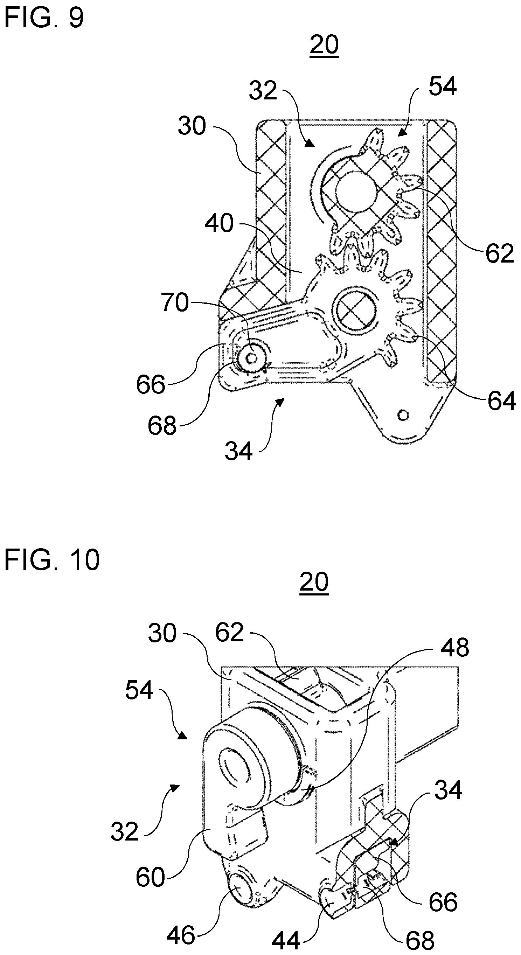

Die Drehriegelvorrichtung 20 kann dazu ausgebildet sein, das Drehelement 32 in einer Verriegelungsstellung und/oder in einer Freigabestellung zu arretieren. Bevorzugt kann die Arretierung magnetisch sein. Beispielsweise kann in der Aufnahme 44 des Lagerkörpers 30 ein (z. B. Permanent-) Magnet 56 zum magnetischen Arretieren des Drehelements 32 in der Freigabestellung positioniert sein. Bevorzugt kann der Magnet 56 in der Aufnahme 44 eingeklebt sein. Beispielsweise kann in der weiteren Aufnahme 46 des Lagerkörpers 30 ein (z. B. Permanent-) Magnet 58 zum magnetischen Arretieren des Drehelements 32 in der Verriegelungsstellung positioniert sein. Bevorzugt kann der Magnet 58 in der weiteren Aufnahme 46 eingeklebt sein. Die Figur 6 zeigt die Aufnahmen 44, 46 mit den darin positionierten Magneten 56, 58. Die Figur 10 zeigt die Aufnahmen 44, 46 ohne die Magnete 56, 58.

Der Lagerkörper 30 kann dazu ausgebildet sein, ein Längsspiel (Spiel entlang einer Längsachse) des Drehelements 32 zu verringern. Der Lagerkörper 30 kann den Rampenbereich 48 aufweisen, der das Längsspiel verringern kann. Bevorzugt kann der Rampenbereich 48 ringsegmentförmig sein, besonders bevorzugt koaxial zu einer Längsachse des Schaftbereichs 52. Beispielsweise kann der Rampenbereich 48 an einer rückseitigen Stirnfläche bzw. Rückseite des Lagerkörpers 30 angeordnet sein. Beim Drehen des Drehelements 32 von der Freigabestellung zu der Verriegelungsstellung kann bevorzugt der Betätigungsbereich 54 den Rampenbereich 48 kontaktieren und entlang des Rampenbereichs 48 geführt sein. Der Rampenbereich 48 kann dabei bewirken, dass das Drehelement 32 beim Drehen zu der Verriegelungsstellung zusätzlich eine Längsbewegung durchführt, bei der der Riegelbereich 50 und der Schaftbereich 52 hin zu dem Rampenbereich 48 bewegt werden. In anderen Worten ausgedrückt, kann der Rampenbereich 48 bewirken, dass das Drehelement 32 beim Drehen zu der Verriegelungsstellung zusätzlich eine Längsbewegung durchführt, bei der das Drehelement 32 hin zu einer Drehachse bzw. Mittelachse des Sortiersterns 10 (siehe Figur 1) bewegt wird.

Der Riegelbereich 50 ist zum Halten eines Behälters 12 ausgebildet. Beispielsweise kann der Riegelbereich 50 in der Verriegelungsstellung des Drehelements 32 einen Behälter 12 in einer Tasche 24 des Sortiersterns 10 halten (siehe Figur 1). Eine Form des Riegelbereichs 50 kann an eine Form der Behälter 12 angepasst sein. Beispielsweise kann der Riegelbereich 50 krallenförmig, klauenförmig oder klammerförmig sein. Der Riegelbereich 50 kann ein vorderstes Ende des Drehelements 32 bilden. In der Freigabestellung kann der Riegelbereich 50 aufrecht bzw. senkrecht orientiert sei. In der Verriegelungsstellung kann der Riegelbereich 50 horizontal orientiert sein. In der Verriegelungsstellung kann der Riegelbereich 50 an einem Außenumfang des gehaltenen Behälters 12 anliegen. Ein Drehwinkel zwischen der Freigabestellung und der Verriegelungsstellung kann beispielsweise rund 90° betragen.

Der Schaftbereich 52 verbindet den Riegelbereich 50 und den Betätigungsbereich 54 integral-einstückig miteinander. Der Schaftbereich 52 kann zwischen dem Riegelbereich 50 und dem Betätigungsbereich 54 angeordnet sein. An einem Ende kann der Schaftbereich 52 in den Riegelbereich 50 übergehen. An einem entgegengesetzten Ende kann der Schaftbereich 52 in den Betätigungsbereich 54 übergehen. Der Schaftbereich 52 kann drehbar in dem Loch 38 des Lagerkörpers 30 angeordnet sein. Der Schaftbereich 52 kann sich im Wesentlichen länglich erstrecken. Der Schaftbereich 52 kann als ein Hohlwellenbereich ausgeführt sein.

Der Betätigungsbereich 54 dient zum Betätigen des Drehelements 32. Im Einzelnen kann eine Betätigungseinrichtung (z. B. aufweisend die Nocken 26, 28 - siehe Figur 1) das Drehelement 32 über den Betätigungsbereich 54 zum Einnehmen der Verriegelungsstellung und/oder der Freigabestellung betätigen. Der Betätigungsbereich 54 kann ein hinterstes Ende des Drehelements 32 bilden.

Bevorzugt kann der Betätigungsbereich 54 einen Hebelarmabschnitt 60 und einen Zahnradabschnitt 62 aufweisen.

Der Hebelarmabschnitt 60 kann außerhalb von dem Lagerkörper 30 angeordnet sein. Der Hebelarmabschnitt 60 kann beispielsweise von der ersten Nocke 26 (siehe Figur 1) oder einer Steuerkurve betätigbar sein, um das Drehelement 32 in die Verriegelungsstellung zu bewegen. Dabei kann der Hebelarmabschnitt 60 gedreht werden, zum Beispiel um rund 90°, wodurch sich der Riegelbereich 50 ebenfalls dreht, nämlich in die Verriegelungsstellung. Der Hebelarmabschnitt 60 kann ein hinterstes Ende des Betätigungsbereichs 54 bilden.

Der Zahnradabschnitt 62 kann innerhalb des Lagerkörpers 30 angeordnet sein. Der Zahnradabschnitt 62 kann zwischen dem Schaftbereich 52 und dem Hebelarmabschnitt 60 angeordnet sein.

Der Zahnradabschnitt 62 kann mit einem (zusätzlichen) Zahnradabschnitt 64 des zusätzlichen Drehelements 34 kämmen. Damit können sich die Drehelemente 32, 34 miteinander drehen. Eine Drehung des Drehelements 32 kann eine Drehung des zusätzlichen Drehelements 34 bewirken und umgekehrt.

Das zusätzliche Drehelement 34 kann drehbar in der Aussparung 40 des Lagerkörpers 30 gelagert sein. Das zusätzliche Drehelement 34 kann zum Drehen mit dem Drehelement 32 verbunden sein. Das zusätzliche Drehelement 34 kann den (zusätzlichen) Zahnradabschnitt 64 und den (zusätzlichen) Hebelarmabschnitt 66 aufweisen.

Der Zahnradabschnitt 64 kann mit dem Zahnradabschnitt 62 kämmen.

Der Hebelarmabschnitt 66 kann teilweise außerhalb von dem Lagerkörper 30 angeordnet sein. Der Hebelarmabschnitt 66 kann beispielsweise von der zweiten Nocke 28 (siehe Figur 1) oder einer Steuerkurve betätigbar sein, um das Drehelement 32 in die Freigabestellung zu bewegen. Die zweite Nocke 28 oder die Steuerkurve kann den Hebelarmabschnitt 66 drehen, zum Beispiel um rund 90°, wodurch sich das zusätzliche Drehelement 34 dreht, das wiederum das Drehelement 32 dreht, wodurch sich ebenfalls der Riegelbereich 50 dreht, nämlich in die Freigabestellung.

Der Hebelarmabschnitt 66 kann beispielsweise von der zweiten Nocke 28 (siehe Figur 1) betätigbar sein, um das Drehelement 32 in die Freigabestellung zu bewegen. Der Hebelarmabschnitt 66 kann in die Aussparung 40 durch Drehung des zusätzlichen Drehelements 34 eigeschwenkt werden, wenn bspw. die zweite Nocke 28 den Hebelarmabschnitt 66 berührt, z. B. beim Bewegen des Drehelements 32 von der Verriegelungsstellung zu der Freigabestellung. Der Hebelarmabschnitt 66 kann aus der Aussparung 40 durch Drehung des zusätzlichen Drehelements 34 ausgeschwenkt werden, wenn bspw. die erste Nocke 26 den Hebelarmabschnitt 60 des Bestätigungsbereichs 54 des Drehelements 32 berührt und dadurch das Drehelement 32 dreht, das wiederum das zusätzliche Drehelement 34 dreht. Dies kann bspw. bei einer Bewegung des Drehelements 32 von der Freigabestellung zu der Verriegelungsstellung erfolgen.

Das zusätzliche Drehelement 34 kann eine (zusätzliche) Aufnahme 68 aufweisen. Bevorzugt kann die Aufnahme 68 im Hebelarmabschnitt 66 angeordnet sein. In der Aufnahme 68 kann ein (z. B. Permanent-) Magnet 70 positioniert werden. Bevorzugt wird der Magnet 70 in die Aufnahme 68 eingeklebt. Die Figur 9 zeigt die Aufnahme 68 mit dem darin positionierten Magneten 70. Die Figur 10 zeigt die Aufnahme 68 ohne den Magneten 70.

In der Freigabestellung kann der Magnet 70 dem Magneten 56 direkt gegenüberliegen. Damit kann das zusätzliche Drehelement 34 durch magnetische Wechselwirkung zwischen den Magneten 56 und 70 magnetisch arretiert sein. Die magnetische Arretierung des zusätzlichen Drehelements 34 bewirkt, dass auch das Drehelement 32 (mittelbar) magnetisch arretiert sein kann, da die magnetische Arretierung des zusätzlichen Drehelements 34 eine Bewegung des Drehelements 32 erschwert.

In der Verriegelungsstellung kann der Magnet 70 dem Magneten 58 direkt gegenüberliegen. Damit kann das zusätzliche Drehelement 34 durch magnetische Wechselwirkung zwischen den Magneten 58 und 70 magnetisch arretiert sein. Die magnetische Arretierung des zusätzlichen Drehelements 34 bewirkt, dass auch das Drehelement 32 (mittelbar) magnetisch arretiert sein kann, da die magnetische Arretierung des zusätzlichen Drehelements 34 eine Bewegung des Drehelements 32 erschwert.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Lagerkörpers, des Drehelements, des Betätigungsbereichs, des Riegelbereichs und/oder des Schaftbereichs des unabhängigen Anspruchs 1 offenbart.

### Bezugszeichenliste

- 10: Sortierstern
- 12: Behälter
- 14: Zulaufförderer
- 16: erster Auslaufförderer
- 18: zweiter Auslaufförderer
- 20: Drehriegelvorrichtung
- 22: Sternplatte
- 24: Tasche
- 26: erster Nocken
- 28: zweiter Nocken
- 30: Lagerkörper
- 32: Drehelement
- 34: zusätzliches Drehelement
- 36: Befestigungsloch
- 38: Loch
- 40: Aussparung
- 42: Durchlass
- 44: Aufnahme
- 46: weitere Aufnahme
- 48: Rampenbereich
- 50: Riegelbereich
- 52: Schaftbereich
- 54: Betätigungsbereich
- 56: Magnet
- 58: weiterer Magnet
- 60: Hebelarmabschnitt
- 62: Zahnradabschnitt
- 64: (zusätzlicher) Zahnradabschnitt
- 66: (zusätzlicher) Hebelarmabschnitt
- 68: (zusätzliche) Aufnahme
- 70: (zusätzlicher) Magnet

## Patentansprüche

1. Drehriegelvorrichtung (20) für einen Transportstern, vorzugsweise Sortierstern (10), zum Transportieren von Behältern (12), aufweisend:
einen Lagerkörper (30); und
ein Drehelement (32) mit:
- einem Betätigungsbereich (54) zum Betätigen des Drehelements (32);
- einem Riegelbereich (50) zum Halten eines Behälters (12); und
- einem Schaftbereich (52), der den Betätigungsbereich (54) und den Riegelbereich (50) integral-einstückig miteinander verbindet und drehbar in dem Lagerkörper (30) gelagert ist;
wobei der Lagerkörper (30) und das Drehelement (32) aus mehreren aneinander angrenzenden, vorzugsweise additiv gefertigten, Materialschichten gebildet sind.

2. Drehriegelvorrichtung (20) nach Anspruch 1, wobei:
der Lagerkörper (30) und/oder das Drehelement (32) mehrere, vorzugsweise kugelförmige, Verstärkungsteile, vorzugsweise aus einem Glaswerkstoff, aufweisen, die in den Materialschichten eingebettet sind.

3. Drehriegelvorrichtung (20) nach Anspruch 1 oder Anspruch 2, wobei:
das Drehelement (32) zwischen einer Verriegelungsstellung zum Halten eines Behälters (12) mittels des Riegelbereichs (50) und einer Freigabestellung zum Freigeben des Behälters (12) drehbar ist, vorzugsweise um rund 90°; und
das Drehelement (32) in der Verriegelungsstellung und/oder in der Freigabestellung, vorzugsweise magnetisch, arretierbar ist.

4. Drehriegelvorrichtung (20) einem der vorherigen Ansprüche, wobei:
der Lagerkörper (30) eine Aufnahme (4) aufweist, in der ein Magnet (56), das Drehelement (32) in einem von der Verriegelungsstellung und der Freigabestellung arretiert, angeordnet, vorzugsweise eingeklebt, ist; und optional
der Lagerkörper (30) eine weitere Aufnahme (46) aufweist, in der ein weiterer Magnet (58), der das Drehelement (32) in dem anderen von der Verriegelungsstellung und der Freigabestellung arretiert, angeordnet, vorzugsweise eingeklebt, ist.

5. Drehriegelvorrichtung (20) nach einem der vorherigen Ansprüche, ferner aufweisend:
ein zusätzliches Drehelement (34), das drehbar in dem Lagerkörper (30) gelagert und zum Drehen mit dem Drehelement (32) verbunden ist, vorzugsweise miteinander kämmend,
wobei:
das zusätzliche Drehelement (34) aus mehreren aneinander angrenzenden, vorzugsweise additiv gefertigten, Materialschichten gebildet ist; und/oder
das zusätzliche Drehelement (34) eine Aufnahme (68) aufweist, in der ein Magnet (70) zum Arretieren des Drehelements (32) angeordnet ist.

6. Drehriegelvorrichtung (20) nach Anspruch 5, wobei:
das zusätzliche Drehelement (34) einen Zahnradabschnitt (64) aufweist, der mit einem Zahnradabschnitt (62) des Betätigungsbereichs (54) kämmt; und/oder
das zusätzliche Drehelement (34) einen Hebelarmabschnitt (66) zum Betätigen durch eine Nocke (28) oder eine Steuerkurve aufweist.

7. Drehriegelvorrichtung (20) nach einem der vorherigen Ansprüche, wobei:
der Lagerkörper (30) einen, vorzugsweise ringsegmentförmigen, Rampenbereich (48) aufweist, an dem das Drehelement (32), vorzugsweise der Betätigungsbereich (54) des Drehelements (32), zum Verringern eines Längsspiels des Drehelements (32) beim Drehen des Drehelements (32) geführt ist.

8. Drehriegelvorrichtung (20) nach einem der vorherigen Ansprüche, wobei
der Lagerkörper (30) ein Loch (38), vorzugsweise Durchgangsloch, aufweist, in dem der Schaftbereich (52), vorzugsweise gleitend, drehbar gelagert ist; und
der Lagerkörper (30) entlang des Schaftbereichs (52) mindestens einen Durchlass (42) aufweist, der einen Außenumfang des Lagerkörpers (30) und das Loch (38) miteinander verbindet.

9. Drehriegelvorrichtung (20) nach Anspruch 8, wobei:
der mindestens eine Durchlass (42) als ein Langloch, das parallel zu dem Schaftbereich (52) ausgerichtet ist, ausgebildet ist; und/oder
der mindestens eine Durchlass (42) mehrere Durchlässe (42) aufweist, die bezüglich einer Längsachse des Schaftbereichs (52) voneinander beabstandet und/oder an derselben Seite des Lagerkörpers (30) angeordnet sind.

10. Drehriegelvorrichtung (20) nach einem der vorherigen Ansprüche, wobei:
der Betätigungsbereich (54) einen Hebelarmabschnitt (60) zum Betätigen durch eine Nocke (26) oder eine Steuerkurve aufweist, wobei der Hebelarmabschnitt (60) vorzugsweise außerhalb des Lagerkörpers (30) angeordnet ist; und/oder
der Betätigungsbereich (54) einen Zahnradabschnitt (62) zum Betätigen durch einen Zahnradabschnitt (64) eines zusätzlichen Drehelements (34) der Drehriegelvorrichtung (20) aufweist, wobei der Zahnradabschnitt (62) des Betätigungsbereichs (54) vorzugsweise innerhalb des Lagerkörpers (30) angeordnet ist.

11. Transportstern, vorzugsweise Sortierstern (10), zum Transportieren von Behältern (12), aufweisend:
mehrere Drehriegelvorrichtungen (20) nach einem der vorherigen Ansprüche, wobei die mehreren Drehriegelvorrichtungen (20), vorzugsweise gleichmäßig, um einen Umfang des Transportsterns angeordnet sind; und optional
mindestens eine Sternplatte (22), die an ihrem Umfang mehrere, vorzugsweise bogenförmige, Taschen (24) zum Aufnehmen der Behälter (12) aufweist, wobei die mehreren Drehriegelvorrichtungen (20) zum Halten der Behälter (12) in den mehreren Taschen (24) angeordnet sind.

12. Verfahren zum Herstellen einer Drehriegelvorrichtung (20), vorzugsweise nach einem der Ansprüche 1 bis 10, für einen Transportstern, vorzugsweise Sortierstern (10), zum Transportieren von Behältern (12), aufweisend:
additives Fertigen der Drehriegelvorrichtung (20) mit einem Lagerkörper (30) und einem Drehelement (32) aufweisend einen Betätigungsbereich (54) zum Betätigen des Drehelements (32), einen Riegelbereich (50) zum Halten eines Behälters (12) und einen Schaftbereich (52), der den Betätigungsbereich (54) und den Riegelbereich (50) integral-einstückig miteinander verbindet und drehbar in dem Lagerkörper (30) gelagert ist, wobei der Lagerkörper (30) und das Drehelement (32) gemeinsam additiv gefertigt werden, vorzugsweise in einem Pulverbettverfahren und/oder mit Einbettung von Verstärkungsteilen.

13. Verfahren nach Anspruch 12, wobei mindestens eines der nachfolgenden Merkmale erfüllt ist:
das Drehelement (32) wird teilweise innerhalb und teilweise außerhalb des Lagerkörpers (30) gemeinsam mit dem Lagerkörper (30) additiv gefertigt;
der Lagerkörper (30) und das Drehelement (32) werden mit einem dazwischen angeordneten Spalt, vorzugsweise im Zehntelmillimeterbereich oder Hundertstelmillimeterbereich, gemeinsam additiv gefertigt;
der Lagerkörper (30) und das Drehelement (32) werden derart gemeinsam additiv gefertigt, dass das Drehelement (32) durch den Riegelbereich (50) und den Betätigungsbereich (54) axial in dem Lagerkörper (30) gesichert ist; und
beim additiven Fertigen wird ein zusätzliches Drehelement (34), das zum Drehen mit dem Drehelement (32) verbunden ist, gemeinsam mit dem Lagerkörper (30) und dem Drehelement (32) additiv gefertigt.

14. Verfahren nach Anspruch 12 oder Anspruch 13, ferner aufweisend:
Entfernen von losem Materialpulver, das zwischen dem Lagerkörper (30) und dem Drehelement (32) angeordnet ist, durch mindestens einen Durchlass (42) im Lagerkörper (30) hindurch nach dem additiven Fertigen; und/oder
Positionieren, vorzugsweise Einkleben, mindestens eines Magneten (56, 58, 70) in dem Lagerkörper (30) und/oder in einem zusätzlichen Drehelement (34) der Drehriegelvorrichtung (20), vorzugsweise zum magnetischen Arretieren des Drehelements (32).

15. Computerprogrammprodukt aufweisend Anweisungen, die eine additive Fertigungsvorrichtung veranlassen:
eine Drehriegelvorrichtung (20) nach einem der Ansprüche 1 bis 10 in einer Vielzahl von Materialschichten in einem additiven Fertigungsverfahren herzustellen; oder
ein Verfahren nach Anspruch 12 oder Anspruch 13 durchzuführen.
